# EUROPEAN PATENT SPECIFICATION

(11) **EP 3 894 311 B1**
(45) Date of publication and mention of the grant of the patent: **05.04.2023**
(21) Application number: 19824201.8
(22) Date of filing: 06.12.2019
(51) Int. Cl.: B62K 5/01, B62D 9/02, B60G 17/06, B60G 21/05, B62K 5/027, B62K 5/08, B62K 5/10

(54) **FORECARRIAGE FOR TWO FRONT STEERED WHEEL VEHICLE AND MOTOR VEHICLE INCLUDING SAID FORECARRIAGE**
VORDERACHSE FÜR EIN FAHRZEUG MIT ZWEI ANGELENKTEN VORDERRÄDERN UND KRAFTFAHRZEUG MIT BESAGTER VORDERACHSE
AVANT-TRAIN POUR DEUX VÉHICULES À ROUES DIRECTRICES AVANT ET VÉHICULE À MOTEUR COMPRENANT LEDIT AVANT-TRAIN

(30) Priority: 10.12.2018 IT 201800010942
(43) Date of publication of application: 20.10.2021
(73) Proprietor: Piaggio & Co. S.p.A., 56025 Pontedera (PI) (IT)
(72) Inventor: RAFFAELLI, Andrea, 56025 Pontedera (PI) (IT)
(74) Representative: Mannucci, Michele
(86) International application number: PCT/IB2019/060526
(87) International publication number: WO 2020/121144

(56) References cited:
- EP-A1- 2 889 210
- WO-A1-2018/104906
- US-A1- 2007 126 199

## Description

### TECHNICAL FIELD

The present invention relates to the field of so-called tilting motor vehicles, i.e. vehicles provided with a tilting movement around a median plane that extends longitudinally along the vehicle. Tilting motor vehicles are typically three-wheeled motorcycles, with two front steered wheels and a rear drive wheel. The tilting movement allows the motor vehicle to tilt while driving, for example when driving around a curve.

### BACKGROUND ART

WO 2018/104906 discloses the preamble of claim 1.

In the field of motor vehicles, there is an ever-increasing supply of vehicles combining the characteristics of motorcycles, in terms of ease of handling, with the stability of four-wheeled vehicles.

These models are represented, for example, by three-wheeled motor vehicles provided with two front steered wheels and a rear drive wheel, and by four-wheeled motor vehicles, so-called quad-bikes.

In more detail, the aforementioned three-wheeled motor vehicles are tilting, that is rolling laterally with a tilting movement, i.e. an oscillation movement about an axis substantially oriented in the driving direction. These three-wheeled vehicles also comprise an engine coupled to the rear drive wheel to provide torque, and thus to allow traction, while the paired front wheels control the direction of the vehicle.

Thanks to this solution, motor vehicles with two front steered wheels have greater stability than two-wheeled motor vehicles, due to the double support of the front wheels on the ground, similar to that provided by a car.

The front wheels are kinematically connected to each other by means of mechanisms allowing the wheels to tilt and to steer substantially synchronously, for example through the interposition of four-bar linkages, which connect the front wheels to a forecarriage frame. These motor vehicles are also equipped with two independent suspensions, one for each front drive wheel. Each suspension is provided with an elastic element (spring) and a viscous element (shock absorber).

Tilting three-wheeled motor vehicles are therefore intended to ensure the user the manoeuvrability of a two-wheeled motorcycle and, at the same time, the stability and safety of a four-wheeled motor vehicle.

Tilting three-wheeled motor vehicles of this type are disclosed, for example, in WO2017/115294, WO2017/115295, WO2017/115296, WO2017/115297, and WO2018/104906.

The design of the suspension and steering systems for this type of vehicles is a critical aspect, as they shall provide driving comfort and safety.

There is therefore a need for continuous improvements in the suspension and steering systems for tilting vehicles with two front steered wheels.

### SUMMARY OF THE INVENTION

According to a first aspect, the invention relates to a forecarriage for motor vehicles comprising a tilting four-bar linkage and two suspension units for the two front wheels. The tilting four-bar linkage comprises a first crossbar, a second crossbar, a first upright and a second upright, hinged together. The first crossbar and the second crossbar extend transversely with respect to a median plane of the vehicle, i.e. they extend in right-left direction. Each of said first upright and second upright is hinged, at two points spaced from each other, to the first crossbar and to the second crossbar. Each of said first crossbar and second crossbar is, in turn, hinged, at a respective middle point, to a forecarriage frame or to an element rigidly connected to said forecarriage frame, for example to a steering sleeve.

A respective suspension unit is associated with each upright. Each suspension unit comprises a wheel support for a respective front wheel of the motor vehicle. The wheel support defines a rotation axis of the respective wheel. Each suspension unit further comprises a support arm rotatably connected to the respective upright, so as to rotate around a steering axis.

Each suspension unit also comprises a respective suspension four-bar linkage. In some embodiments, the support arm, or part thereof, is one of the elements of the suspension four-bar linkage, and the wheel support is a second element of the suspension four-bar linkage.

In embodiments disclosed herein, each suspension four-bar linkage comprises also a pair of cranks joining the wheel support and the support arm. In particular, each four-bar linkage comprises a first crank hinged to the wheel support and to the support arm and a second crank hinged to the wheel support and to the support arm. The first crank, the second crank, the wheel support and the support arm of each suspension unit, hinged together, form the respective suspension four-bar linkage, which extends essentially along a median plane substantially orthogonal to the median plane of the respective front steered wheel. In other words, the hinge axes, through which the cranks are joined to the support arm and to the wheel support, i.e. the rotation axes of the components of the suspension four-bar linkage, which are parallel to each other, are orthogonal to a plane containing the rotation axis of the respective front steered wheel and parallel to the median plane of the respective front steered wheel.

In general, the suspension four-bar linkage of each front steered wheel is orthogonal to the median plane of the respective front steered wheel. Each axis of mutual articulation of two components of the suspension four-bar linkage is orthogonal to a plane containing the rotation axis of the respective front steered wheel.

Each suspension unit further comprises a shock absorber, constrained at two points of the suspension four-bar linkage. The two points are such that the mutual distance thereof changes when the suspension four-bar linkage moves. In this way, when the four-bar linkage moves, for example due to an up-and-down movement of the respective front steered wheel, there is a corresponding change in the length of the shock absorber.

A forecarriage of this type allows the point of contact between the ground and the wheel to move with a rectilinear movement with respect to the motor vehicle, in the projection on the median plane of the vehicle, and not with a roto-translation movement as it happens, for example, in the suspension system disclosed in WO2018/104906, where the suspension four-bar linkage of each steered wheel is parallel to the median plane of the wheel and therefore has hinge axes parallel to the rotation axis of the respective front steered wheel. The suspension obtained acts in a manner equivalent to that of a fork suspension, but has a substantially lower cost and additional kinematic advantages. In fact, whilst a fork suspension shall be necessarily provided with mutually movable elements, between which there are arranged sliding supports, i.e. supports for translation movements, in a suspension four-bar linkage like that described herein, the up-and-down movements of the wheels cause rotation movements of the components of the suspension four-bar linkages around rotation supports, rather than translation supports. Systems with less friction are thus obtained, adapted to provide better driving comfort, less wear and reduced production and maintenance costs.

In some embodiments, the forecarriage described above also allows further advantages compared to the configurations of the prior art. In particular, the suspension four-bar linkage, developing orthogonally to the median plane of the respective front steered wheel, allows to control the camber angle of the respective front steered wheel, which can be varied during diving of the suspension, i.e. during compression of the shock absorber, as it happens on high performance cars or racing cars.

In addition, with the suspension four-bar linkage described herein, during the rotation of the steered wheels around the respective steering axes, the plane where the four-bar linkage lies and the plane where the wheel lies have always the same orientation at 90° with respect to each other.

According to a further aspect, the invention relates to a motor vehicle with at least one rear drive wheel, two front steered wheels, and a forecarriage as described above, wherein the two wheel supports support the two steered wheels of the vehicle.

A motor vehicle is also disclosed, comprising a forecarriage and a pair of front steered wheels, connected to the forecarriage by means of a tilting four-bar linkage. Furthermore, the motor vehicle comprises, for each front steered wheel, a suspension four-bar linkage and a shock absorber. Each shock absorber is constrained to two components of the suspension four-bar linkage at two points such that the shock absorber changes in length as the suspension four-bar linkage moves. Each suspension four-bar linkage extends along a plane orthogonal to the plane where the respective front wheel lies. In practice, the configuration is such that each axis of mutual articulation between two components of the suspension four-bar linkage is orthogonal to a plane containing the rotation axis of the respective front steered wheel.

Advantageously, the wheel support arm, which is one of the four elements of each suspension four-bar linkage, can form an upright extending towards the tilting four-bar linkage. In this way, the support arm of each front steered wheel connects kinematically said wheel to the tilting four-bar linkage, which can advantageously be arranged at a higher level with respect to the two suspension four-bar linkages. In this way, the suspension members in the area comprised between the two front steered wheels are less bulky than what disclosed, for example, in WO2018/104906. This allows the two front wheels to be arranged closer together, i.e. closer to the centreline plane of the motor vehicle, as it is not necessary to leave space for the tilting four-bar linkage between the front wheels.

In possible embodiments of the forecarriage and of the motor vehicle according the invention, the shock absorber is interposed between the support arm and the wheel support.

For example, the wheel support may have a main body, to which the first crank and the second crank are joined at two points spaced apart from one another. The main body may extend beyond the hinge points of the first crank and of the second crank with an appendix, to which the shock absorber is joined.

In other embodiments of the forecarriage and/or of the motor vehicle described above, the shock absorber can be interposed between the support arm and an auxiliary rocker, joined at two points to the first crank and the second crank. The auxiliary rocker may advantageously be arranged in an intermediate position between the wheel support and the support arm. With this arrangement, the shock absorber load can be distributed on both cranks. Moreover, the constraint point between the shock absorber and the auxiliary rocker moves on a trajectory different than that along which it would move if the shock absorber were directly constrained to one of the cranks of the suspension four-bar linkage. In this way, it is possible to arrange more freely the shock absorber, according to the mechanical bulk of the various components of the suspension, obtaining in any case a sufficiently wide stroke of the shock absorber during the up-and-down movement of the respective wheel.

Each support arm of the two front steered wheels can comprise a connection element for connecting to a steering system, for example for connecting the two support arms to a steering bar, which is, in turn, connected to a steering column rotatably housed in a steering sleeve, integral with the forecarriage frame.

To have a particularly compact arrangement, the forecarriage may have the uprights of the tilting four-bar linkage adapted to form respective housings, in each of which the respective support arm of the respective suspension unit is rotatably housed.

### SHORT DESCRIPTION OF THE DRAWINGS

The invention will be better understood by following the description below and the attached drawings, which illustrate an exemplary and non-limiting embodiment of the invention. More specifically, in the drawing:
Fig. 1 is a side view of a three-wheeled vehicle according to the invention;
Fig. 2 is a plan view according to II-II of Fig. 1;
Fig. 3 is a front view according to III-III of Figs. 1 and 2;
Fig. 4 is an isometric view of the front part of the motor vehicle of Figs. 1, 2 and 3;
Figs. 5A, 5B and 6A, 6B show partially cut-away enlarged frontal views of two alternative embodiments of the suspensions of the front wheels;
Fig. 7 is a view according to VII-VII of Fig. 6A;
Fig. 8 is a front view according to VIII-VIII of Fig. 7;
Fig. 9 is a partially cut-away view, similar to that of Figs. 5A and 6A, of a further embodiment of the suspension unit;
Fig. 10 is a view according to X-X of Fig. 9;
Fig. 11 is a view according to XI-XI of Fig. 10; and
Figs. 12 and 13 show kinematic diagrams of two embodiments of the forecarriage of the motor vehicle.

### DETAILED DESCRIPTION OF AN EMBODIMENT

The attached drawings show an embodiment of the invention, applied to a three-wheeled motor vehicle, i.e. a vehicle with a single rear drive wheel; as noted above, however, the forecarriage of the invention can be also applied to four-wheel vehicles, like the so-called quad-bikes.

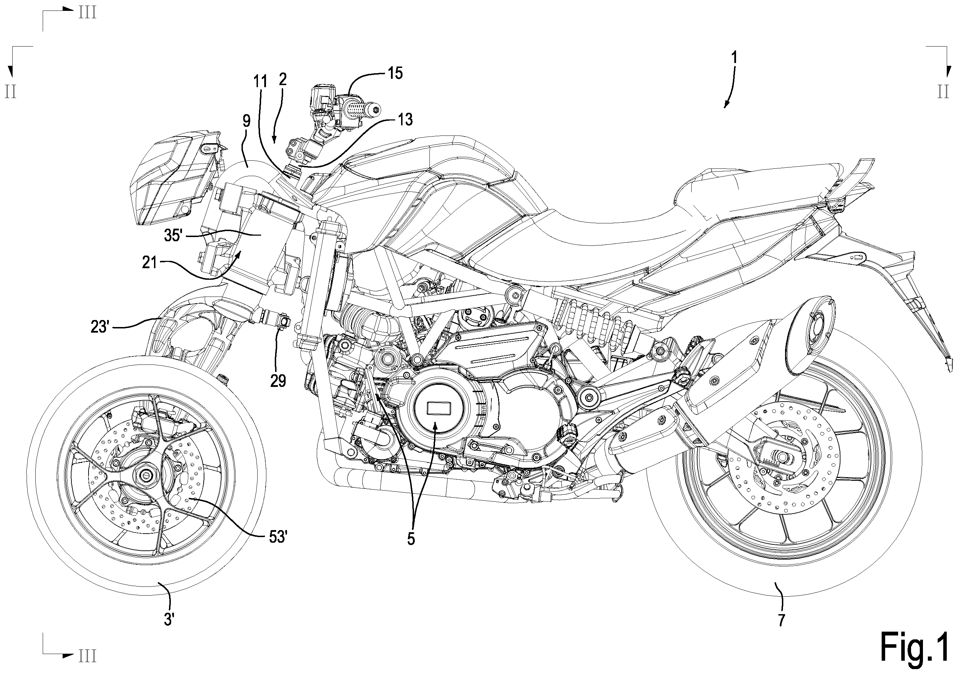

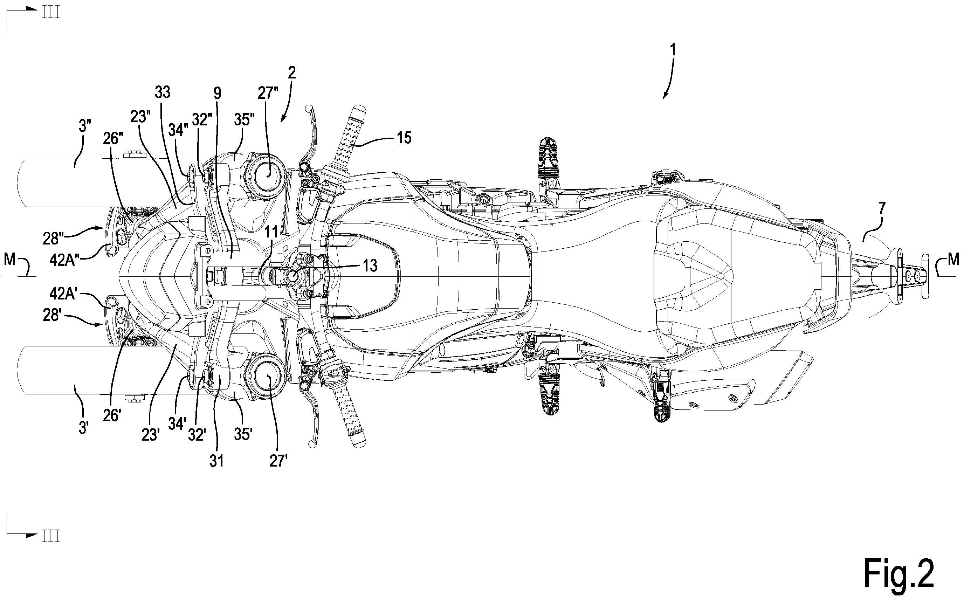

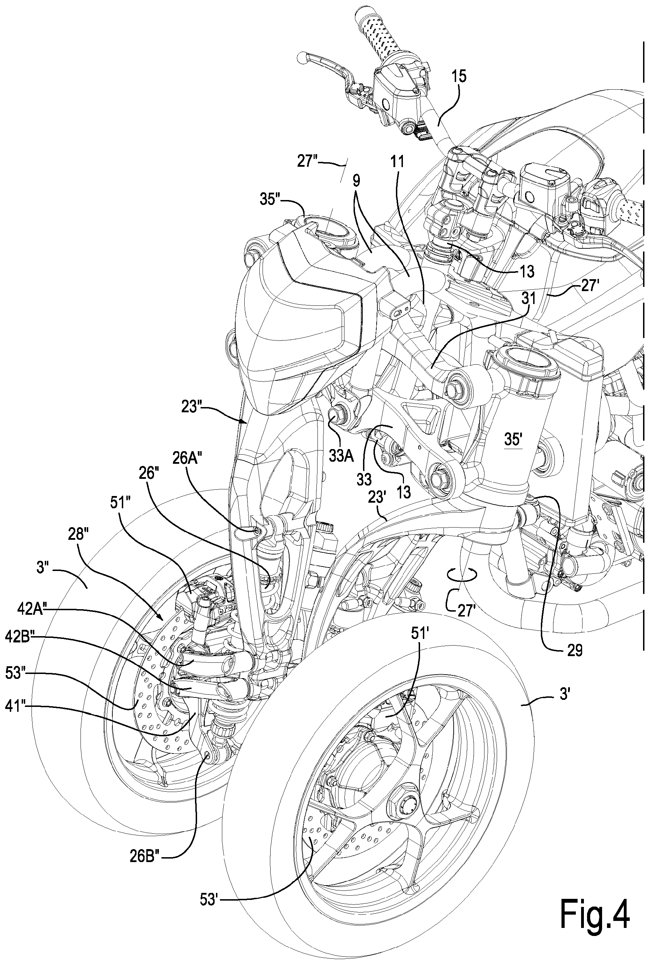

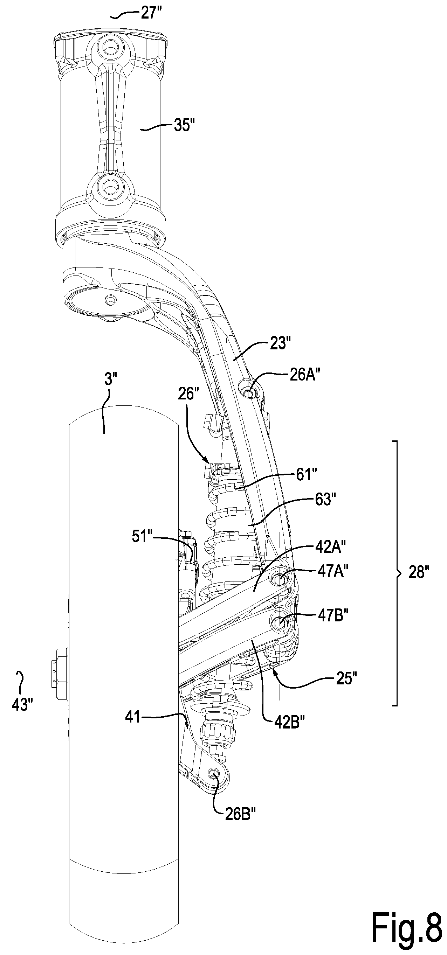

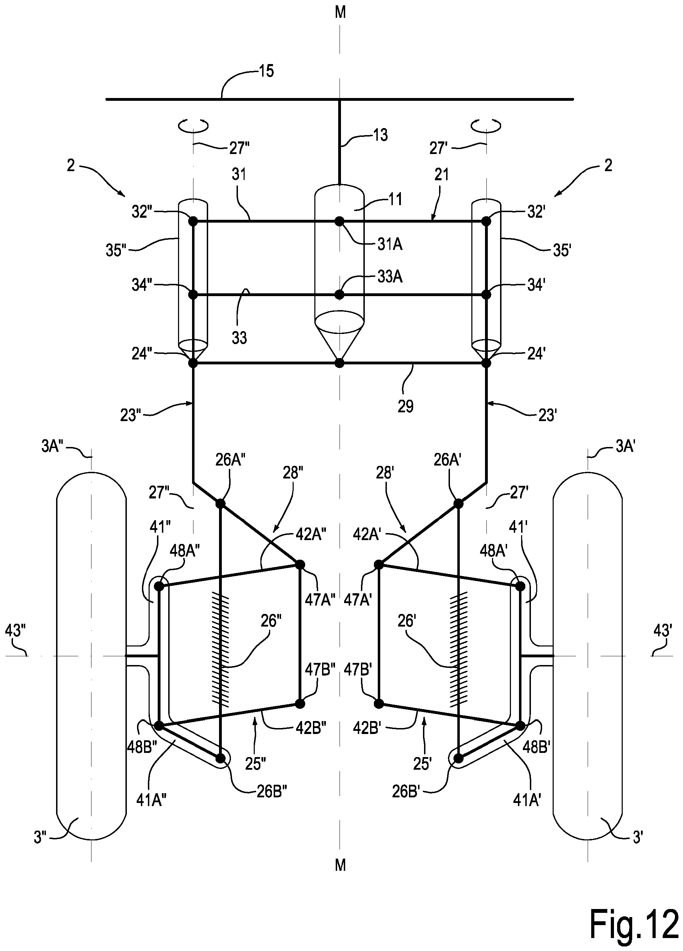

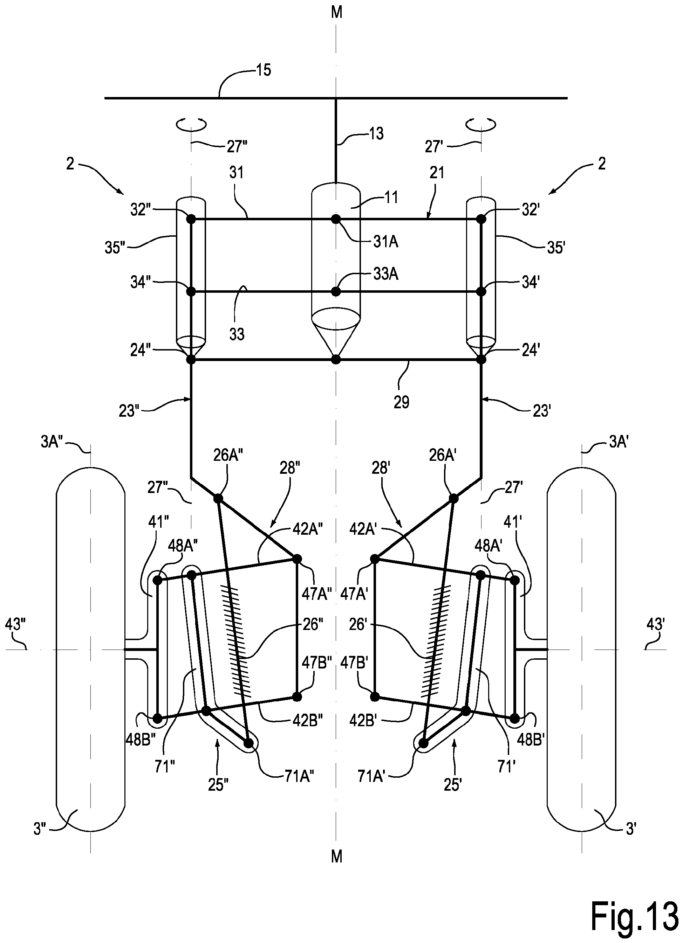

For better understanding the novel features of the various embodiments of the suspension and steering system according to the present invention, Figs. 1 to 11 show actual embodiments thereof, whilst Figs. 12 and 13 show kinematic diagrams of the components defining the suspensions and the members that allow the tilting movements of the motor vehicle and the steering movements of the front wheels.

The motor vehicle 1 comprises a front part, or forecarriage, indicated with the reference number 2, to which two front steered wheels 3' and 3" are associated. In the description below, components, groups or elements that are symmetrical with respect to a median plane M of the vehicle 1 are indicated with the same reference numbers, wherein the reference numbers are followed by an apex (') for the elements on one side of the median plane M, for example the driver's left side, and by two apexes (") for the elements on the other side of the median plane M, for example the driver's right side. If a reference number, usually used with the apexes (") and (') to indicate elements respectively on the right and left sides of the median plane, is used without apexes, this means that it can indifferently refer to the right or to the left element.

The motor vehicle 1 also comprises an engine 5 and a rear drive wheel 7, with transmission members not shown in detail.

The forecarriage 2 comprises a forecarriage frame 9, with which a steering sleeve 11 is integral. In the steering sleeve 11, a steering column 13 is rotatably housed, torsionally coupled to a handlebar 15, through which the driver imparts the steering to the front steered wheels 3', 3", see also kinematic diagrams of Figs. 12 and 13.

As described in greater detail below, the forecarriage 2 of the motor vehicle 1 comprises a tilting four-bar linkage 21, to which the wheels 3', 3" are connected. The tilting four-bar linkage allows the vehicle to tilt when driving around a curve. Each wheel 3', 3" is connected to the tilting four-bar linkage 21 by means of a respective support arm 23', 23", which is part of a respective suspension four-bar linkage 25', 25". Each suspension four-bar linkage 25', 25" comprises a shock absorber 26', 26". Each suspension four-bar linkage 25', 25" with the respective shock absorber 26', 26" is part of a suspension unit indicated as a whole with 28' and 28" for the wheels 3' and 3". Each suspension unit 28', 28" is connected to the tilting four-bar linkage 21 through the respective support arm 23', 23", which constitutes an extension, in the form of an upright, of one of the elements of the suspension four-bar linkage 25', 25".

Each support arm 23', 23" is connected to the tilting four-bar linkage 21 so as to be rotatable, with respect thereto, around a respective steering axis 27', 27" controlled by the handlebar 15. For this purpose, each support arm 23', 23" comprises a connection member 24', 24" for connecting to a steering bar 29, which is part of a steering linkage connecting the support arms 23', 23" to the steering column 13.

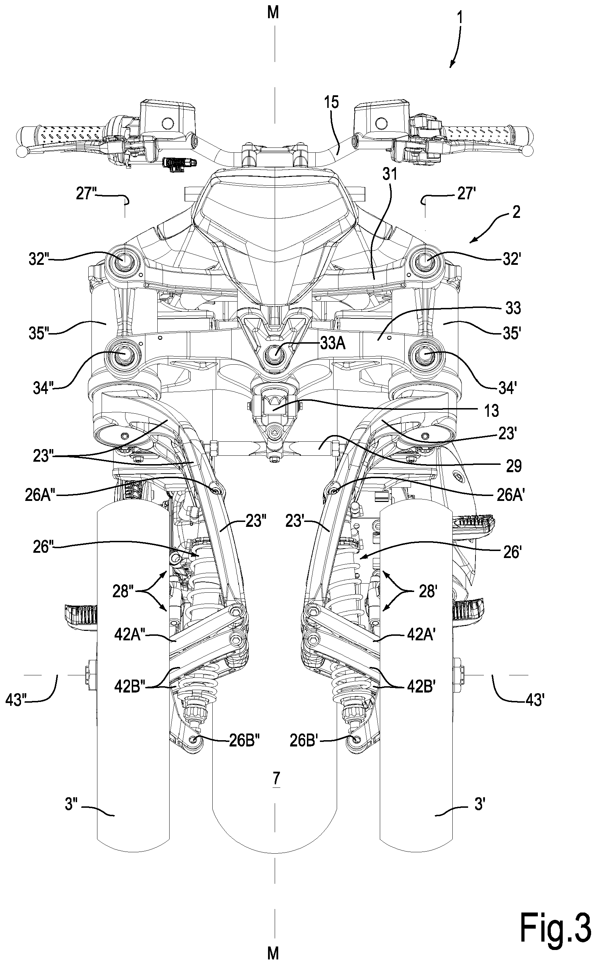

In more detail, the tilting four-bar linkage 21 comprises a first crossbar 31, or upper crossbar, and a second crossbar 33, or lower crossbar. Each crossbar 31, 33 is joined to the forecarriage frame 9, and more precisely, in the illustrated example, to the steering sleeve 11, at a median point, indicated with 31A for the crossbar 31 and with 33A for the crossbar 33. In this in this way, the crossbars 31 and 33 can rotate around tilting axes, defined by the hinges connecting the crossbars to the forecarriage frame. As shown in Fig. 3, where the tilting inclination of the motor vehicle 1 is equal to zero, the tilting axes are substantially parallel to each other and lie on the median plane M of the motor vehicle 1.

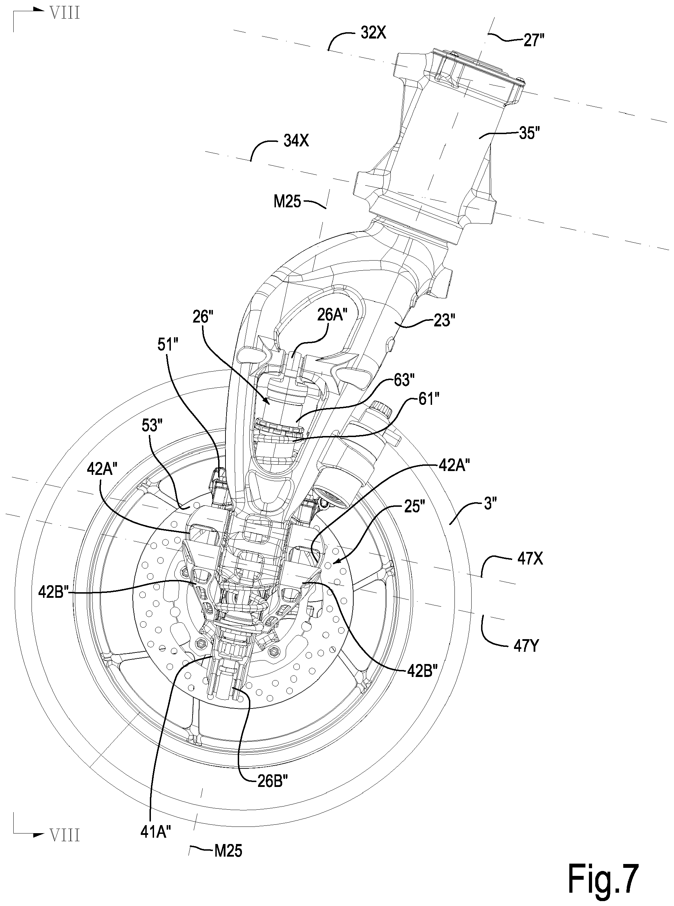

The tilting four-bar linkage 21 also comprises two uprights 35' and 35". More specifically, the upper crossbar 31 is joined to the upright 35' at 32' and to the upright 35" at 32". The lower crossbar 33 is joined to the upright 35' at 34' and to the upright 35" at 34". In Fig. 7, reference numbers 32X and 34X indicate the axes of the joints connecting the upright 35 and the crossbars 31, 33.

In the illustrated embodiment, the uprights 35', 35" are shaped like cylindrical housings, inside which the upper part of the respective support arm 23', 23" is supported. Rolling bearings or bushings, not shown, allow the rotation of the support arm 23', 23" inside the housing formed by the respective upright 35', 35".

Each support arm 23', 23" extends from the tilting four-bar linkage 21 downwards, where the respective suspension four-bar linkage 25', 25" is formed. Therefore, the tilting four-bar linkage 21 is located at a higher level than the two suspension four-bar linkages 25', 25" and the respective wheels 3', 3".

Each suspension four-bar linkage 25', 25" is formed by four elements, one of which is the corresponding support arm 23', 23", which in practice constitutes a rocker of the suspension four-bar linkage 25', 25" and which extends upwards and towards the tilting four-bar linkage in the form of an upright. A wheel support 41', 41" is connected to each of the two support arms 23', 23".

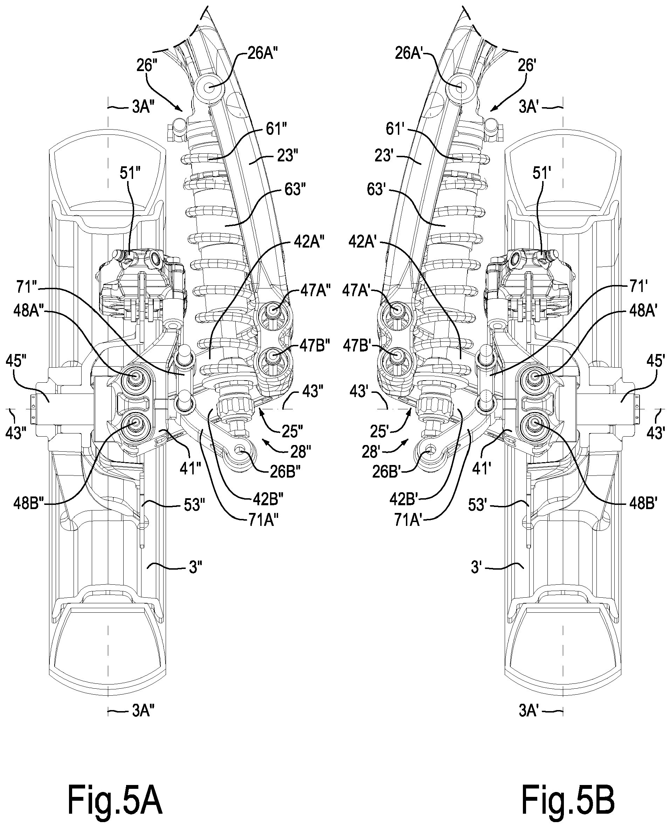

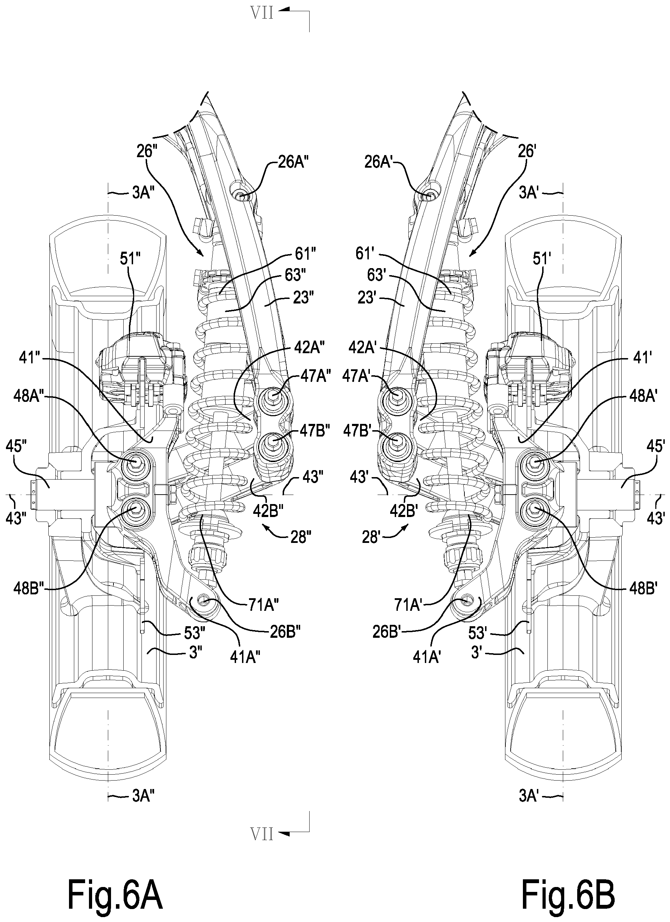

Each wheel support 41', 41" defines a rotation axis 43', 43" of the respective wheel 3', 3". The reference numbers 45', 45" indicate the rotation axle of the respective wheel 3', 3" (see in particular Figs. 5A, 5B; 6A, 6B).

Each wheel support 41', 41" is connected to the respective support arm 23', 23" by means of a pair of cranks 42A', 42B' and 42A", 42B". Reference numbers 47A', 47B' indicate the articulation axes of the cranks 42A', 42B' to the support arm 23', while 47A" and 47B" indicate the articulation axes of the cranks 42A", 42B" to the support arm 23". In Fig. 7, 47X and 47Y indicate the rotation axes of the articulation axes 47A" and 47B" of the cranks 42A", 42B" to the support 23".

Similarly, 48A', 48B' indicate the articulation axes of the cranks 42A', 42B' to the wheel support 41' and 48A", 48B" indicate the articulation axes of the cranks 42A", 42B" to the wheel support 41". The axes of the articulation axes 47A, 47B, 48A, 48B of the four elements 23, 41, 42A, 42B of each suspension four-bar linkage 25 are parallel to one another and orthogonal to a plane containing the rotation axis 43', 43" of the wheel 3', 3".

Each suspension four-bar linkage 25', 25" extends along a plane parallel to the rotation axis 43', 43" of the respective wheel. Therefore, the plane where each suspension four-bar linkage 25', 25" lies is orthogonal to the plane where the respective front steered wheel 3', 3" lies. "Plane where one or more members lie" means, in the present description, the centreline plane passing through the elements of the member(s). Thus, in the case of a four-bar linkage, like the suspension four-bar linkage 25', 25", the lying plane, i.e. the plane on which said four-bar linkage lies, is the centreline plane of the cranks 42A, 42B, and of the portions of the wheel support 41 as well as of the suspension arm 23, to which the cranks 42A, 42B are joined. In the simplified kinematic diagram of Figs. 12 and 13, the lying plane of the suspension four-bar linkage 25, shown in a simplified manner, approximately coincides with the plane of the figure, while the lying plane of the wheel 3 is a plane orthogonal to the plane of the figure. In the embodiment, as shown in Fig. 7 for example, the plane where the suspension four-bar linkage 25 lies is inclined backwards, for example by about 10°, with respect to a vertical plane. The median plane or lying plane of the suspension four-bar linkage 25" is indicated in Fig. 7 with M25.

The lying plane of the wheel 3 is the median plane of the same wheel, indicated with 3A' and 3A", see in particular Figs. 5A, 5B and 6A, 6B.

Each suspension four-bar linkage 25', 25" is essentially arranged so that the median plane thereof, i.e. the plane where the four-bar linkage 25', 25" lies as defined above, is substantially orthogonal to the lying plane of the respective front wheel 3', 3".

In practical embodiments, to have greater mechanical strength, each crank 42A', 42A", 42B', 42B" can be double, as can be seen in Fig. 3 and in particular in Fig. 7. In Figs. 5A, 5B and 6A, 6B only one component of each double crank is shown, and more precisely the component that, in the respective view, is arranged behind the shock absorber 26', 26", while the corresponding component arranged in front of the shock absorber has been omitted to show better the layout of the shock absorber 26', 26". In other embodiments, each crank may be U- or H-shaped, i.e. it can be double but made in a single piece, rather than consisting of two components hinged to a common axis.

Each wheel support 41', 41" may be adapted to support, in addition to the rotation axle 45', 45" of the respective wheel 3', 3", also the braking unit 51', 51" acting on the disc 53', 53 of the brake.

Each shock absorber 26', 26" generally comprises an elastic element, for example a helical spring 61', 61", and a damping element 63', 63". In the illustrated example, each elastic element 61 and the respective damping element 63 are arranged coaxial to one another, but this is not mandatory. For example, the damping element and the elastic element may be arranged parallel to, and adjacent to, each other.

Adequately, each shock absorber 26', 26" is directly or indirectly constrained, preferably at the ends thereof, to two distinct points of the respective suspension four-bar linkage 25', 25". More precisely, to allow the correct operation of the suspension four-bar linkage 25', 25" and the corresponding shock absorber 26', 26", this latter is constrained to two points, whose mutual distance varies when the respective four-bar linkage deforms due to the up-and-down movement of the wheels. In the embodiment of Figs. 1, 2, 3, 4, 6A, 6B, 7, 8 and 12, each shock absorber 26', 26" is hinged at the top at points 26A', 26A" to the support arm 23', 23", and is also hinged at the bottom at points 26B', 26B" to an appendix or extension 41A', 41A" which extends from a main body of the corresponding wheel support 41', 41", to which the cranks 42A', 42B' and 42A", 42B" are joined.

When the four-bar linkage 25', 25" deforms, the two hinge points 26A', 26B'; 26A", 26B" of each shock absorber 26', 26" move towards, and away from, each other (with a consequent shortening and lengthening of the shock absorber).

The constraint described above between shock absorber 26 and elements of the suspension four-bar linkage 25', 25" is not the only possible one. In the embodiment of Figs. 5A, 5B, and 13, each shock absorber 26 is hinged in 26A', 26A" to the corresponding support arm 23', 23", substantially as in the embodiment of Figs. 1-4, 6A, 6B, 7, 8, 12, while at the bottom each shock absorber 26', 26" is hinged in 26B', 26B" to an auxiliary rocker 71', 71", which has an appendix 71A', 71A" and which is hinged, in turn, to the cranks 42A', 42B' and 42A", 42B", respectively. Preferably, the auxiliary rocker 71', 71" (see in particular Figs. 5A, 5B) is arranged in an intermediate position between the wheel support 41', 41" and the support arm 23', 23".

In particularly advantageous embodiments, as shown in the attached drawing, each support arm 23', 23" has a lower curved portion, displaced towards the centre line of the motor vehicle 1 with respect to the corresponding steering axis 27', 27", so as to have more space for mounting the shock absorber 26', 26", while maintaining a reduced distance between the two front steered wheels 3', 3". The two support arms 23', 23" spread apart upwards to join the uprights 35', 35" of the tilting four-bar linkage 21.

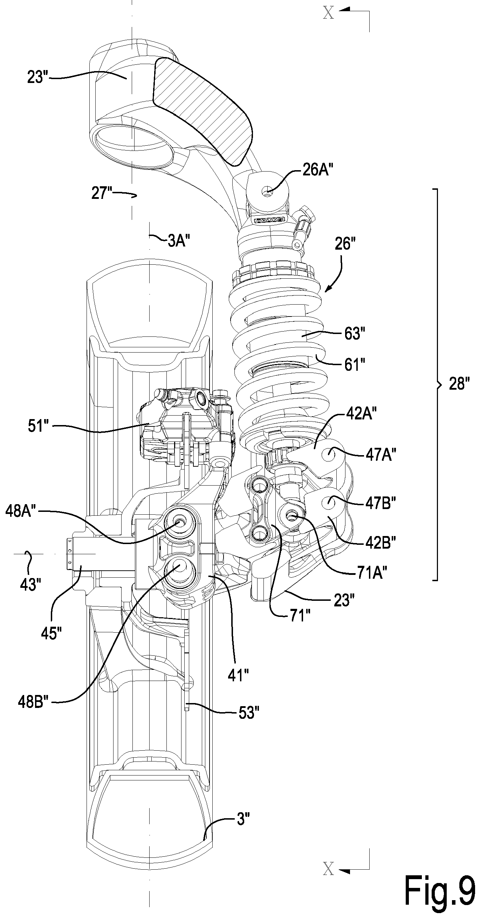

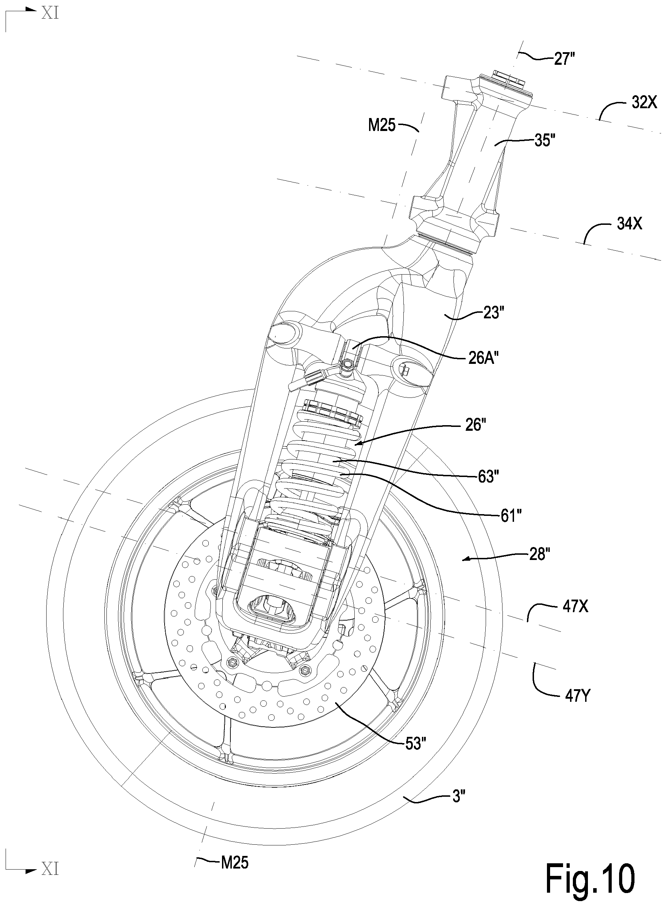

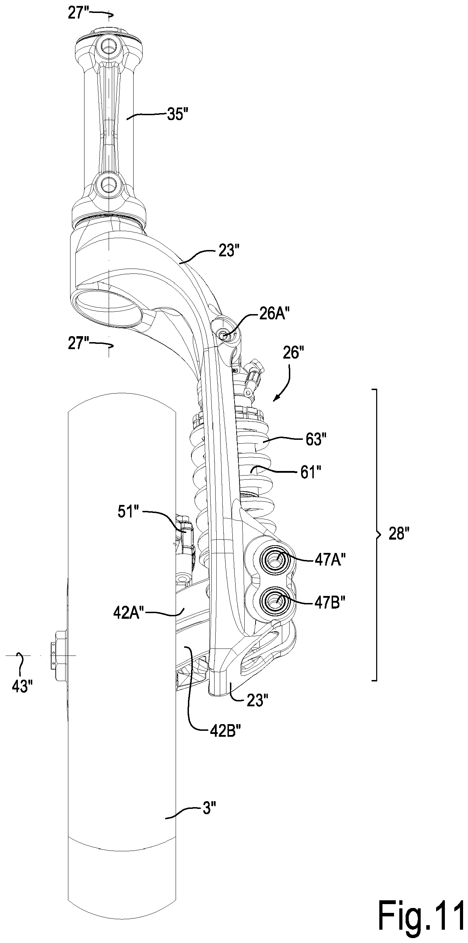

Figs. 9, 10 and 11 show a third embodiment concerning the right suspension unit 28". Equal numbers indicate equal or equivalent parts to those illustrated in the previous figures and already described. These parts will not be described again. Fig. 9 shows a partial sectional view according to an approximately vertical plane parallel to the extension plane, i.e. to the lying plane, of the suspension four-bar linkage 25", similarly to Fig. 5A. Fig. 10 shows a side view, i.e. essentially from the median plane MM of the motor vehicle 1, according to the arrow X-X of Fig. 9, and Fig. 11 shows a front view according to XI-XI of Fig. 10, of the suspension unit 28".

The embodiment of Figs. 9 to 11 is kinematically equivalent to the embodiment of Figs. 5A, 5B and 13, as it has an auxiliary rocker 71". The bottom of the shock absorber 26" is articulated in 71A" to the auxiliary rocker 71". The embodiment of Figs. 9, 10 and 11 differs from the embodiment of Figs. 5A, 5B for the different shape of the auxiliary rocker 71", which in this case does not protrude under the suspension four-bar linkage 25". More specifically, the rocker 71" is completely housed in the volume delimited by the cranks 42A", 42B". In this way, the shock absorber 26" is at a larger distance from the ground and the lower end thereof is not visible, with consequent aesthetic and functional advantages.

Moreover, while in the embodiment of Figs. 1 to 8 the axes 32X, 34X of the joints connecting the upright and the crossbars are parallel to each other and to the rotation axes 47X, 47Y of the articulation axes (see in particular Fig. 7), in the embodiment of Figs. 9 to 11, as can be seen in particular in Fig. 10, the axes 47X, 47Y are not parallel to the axes 32X, 34X, but inclined with respect thereto, for example by about 5°.

## Claims

1. A forecarriage (2) for a motor vehicle comprising:
a tilting four-bar linkage (21) comprising: a first crossbar (31), a second crossbar (33), a first upright (35') and a second upright (35"), hinged together;
a respective suspension unit (28', 28") associated with each upright (35', 35"), the respective first and second suspension units (28', 28") comprising:
- a wheel support (41, 41") for a wheel (3', 3") of the motor vehicle, said wheel support defining a rotation axis (43', 43") of the wheel (3', 3");
- a support arm (23', 23") rotatably connected to the respective upright (35', 35") so as to rotate around a steering axis (27', 27");
- a first crank (42A', 42A") joined to the wheel support (41', 41") and the support arm (23', 23") through respective first articulation axes (47A', 48A'; 47A", 48A") and a second crank (42B', 42B") joined to the wheel support (41', 41") and the support arm (23', 23") through respective second articulation axes (47B', 48B'; 47B", 48B"), wherein the first crank (42A', 42A"), the second crank (42B', 42B"), the wheel support (41', 41") and the support arm (23', 23") form a suspension four-bar linkage 25', 25");
- a shock absorber (26', 26") constrained at two points (26A', 26A"; 26B', 26B") of the suspension four-bar linkage (25', 25"), said two points being such that the mutual distance of said two points changes when the suspension four-bar linkage (25', 25") moves, causing a change in the length of the shock absorber, **characterized in that** said respective first articulation axes and said respective second articulation axes are orthogonal to a plane fully containing the rotation axis (43', 43") of the wheel (3', 3").

2. The forecarriage (2) of claim 1, wherein in each suspension unit the shock absorber (26', 26") is connected to the support arm (23', 23") and the wheel support (41', 41").

3. The forecarriage (2) of claim 2, wherein in each suspension unit the wheel support (41', 41") has a main body, to which the first crank (42A', 42A") and the second crank (42B', 42B") are joined at two points spaced from each other; and wherein the main body extends beyond the articulation points of the first crank and of the second crank with an appendix (41A', 41A"), to which the shock absorber (26', 26") is joined.

4. The forecarriage (2) of claim 1, wherein in each suspension unit the shock absorber (26', 26") is connected to the support arm (23', 23") and to an auxiliary rocker (71', 71"), joined at two points to the first crank (42A', 42A") and the second crank (42B', 42B").

5. The forecarriage (2) of claim 4, wherein in each suspension unit the auxiliary rocker (71', 71") is arranged in an intermediate position between the wheel support (41', 41") and the support arm (23', 23").

6. The forecarriage (2) of one or more of the preceding claims, wherein each wheel support (41', 41") carries a braking unit (51', 51").

7. The forecarriage (2) of one or more of the preceding claims, wherein in each suspension unit the support arm (23', 23") comprises a connection member (24', 24") for connecting to a steering system.

8. The forecarriage (2) of one or more of the preceding claims, wherein in each suspension unit the shock absorber (26', 26") comprises a damping element (63', 63") and an elastic element (61', 61"), in particular a helical spring.

9. The forecarriage (2) of claim 8, wherein in each suspension unit the damping element (63', 63") and the elastic element (61', 61") are arranged around a common axis or around two substantially parallel axes.

10. The forecarriage (2) of one or more of the preceding claims, wherein the two support arms (23', 23") are connected together by means of a steering linkage (29).

11. The forecarriage (2) of one or more of the preceding claims, wherein: the two uprights (35', 35") of the tilting four-bar linkage (21) form respective housings, in each of which the respective support arm (23', 23") of the respective suspension unit (28', 28") is rotatably supported.

12. The forecarriage (2) of one or more of the preceding claims, wherein the tilting four-bar linkage (21) is arranged at greater height than the suspension four-bar linkages (25', 25").

13. The forecarriage (2) of one or more of the preceding claims, comprising a forecarriage frame (9), with which a steering sleeve (11) is integral; wherein a steering column (13) is rotatably housed in the steering sleeve (11); and wherein the steering column (13) is constrained, by means of a steering linkage (29), to the two support arms (23', 23").

14. A motor vehicle (1) comprising at least one rear drive wheel (7), the forecarriage (2) of one or more of the preceding claims, and a pair of front steered wheels (3', 3"), each of which is supported by one of said wheel supports (41', 41").

## Patentansprüche

1. Vorbau (2) für ein Kraftfahrzeug mit:
einem Kipp-Viergelenk (21) mit einem ersten Querstab (31), einem zweiten Querstab 33), einem ersten Ständer (35') und einem zweiten Ständer (35"), die aneinander angelenkt sind, einer jeweiligen Aufhängung (28', 28"), die jedem Ständer (35', 35") zugeordnet ist, wobei die jeweilige erste und zweite Aufhängung (28', 28") aufweist:
- ein Radlager (41, 41") für ein Rad (3', 3") des Kraftfahrzeugs, wobei das Radlager eine Drehachse (43', 43") des Rades (3', 3") definiert
- einen Tragarm (23', 23"), der drehbar mit dem jeweiligen Ständer (35', 35") verbunden ist, um um eine Lenkachse (27', 27") zu drehen,
- eine erste Kurbel (42A', 42"), die mit dem Radlager (41', 41") und dem Tragarm (23', 23") durch jeweilige erste Gelenkachsen (47A', 48A'; 47A", 48A") und eine zweite Kurbel (42B', 42B") verbunden ist, und eine zweite Kurbel (42B', 42B"), die mit dem Radlager (41', 41") und dem Tragarm (23', 23") durch jeweilige zweite Gelenkachsen (47B', 48B'; 47B") verbunden sind, wobei die erste Kurbel (42A', 42A"), die zweite Kurbel (42B', 42B"), das Radlager (41', 41") und der Tragarm (23', 23") eine Viergelenk-Aufhängung (25', 25") bilden,
- einen Stoßdämpfer (26', 26"), der an zwei Punkten (26A', 26A", 26B', 26B") der Viergelenk-Aufhängung (25', 25") begrenzt ist, wobei die beiden Punkte so sind, dass der gegenseitige Abstand der beiden Punkte sich ändert, wenn die Viergelenk-Aufhängung (25', 25") sich bewegt, wodurch eine Änderung der Länge des Stoßdämpfers verursacht wird, **dadurch gekennzeichnet, dass** die jeweiligen ersten Gelenkachsen und die zweiten Gelenkachsen orthogonal zu einer Ebene sind, die vollständig in der Drehachse (43', 43") des Rads (3', 3") enthalten ist.

2. Vorbau (2) nach Anspruch 1, wobei in jeder Aufhängung der Stoßdämpfer (26', 26") mit dem Tragarm (23', 23") und dem Radlager (41', 41") verbunden ist.

3. Vorbau (2) nach Anspruch 2, wobei in jeder Aufhängung das Radlager (41', 41") einen Hauptkörper aufweist, an dem die erste Kurbel (42A', 42A") und die zweite Kurbel (42B', 42B") an zwei Punkten angebracht sind, die voneinander beabstandet sind, und wobei der Hauptkörper sich über die Gelenkpunkte der ersten Kurbel und der zweiten Kurbel erstreckt, mit einem Ansatz (41A', 41A"), an dem der Stoßdämpfer (26', 26") befestigt ist.

4. Vorbau (2) nach Anspruch 1, wobei in jeder Aufhängung der Stoßdämpfer (26', 26") mit dem Tragarm (23', 23" und mit einem Hilfshebel (71', 71") verbunden ist, der an zwei Punkten mit der ersten Kurbel (42A', 42A") und der zweiten Kurbel (42B', 42B") verbunden ist.

5. Vorbau (2) nach Anspruch 4, wobei in jeder Aufhängung der Hilfshebel (71', 71") in einer Zwischenposition zwischen dem Radlager (41', 41") und dem Tragarm (23', 23") angeordnet ist.

6. Vorbau (2) nach einem oder mehreren der vorstehenden Ansprüche, wobei jedes Radlager (41', 41") eine Bremseinheit (51', 51") trägt.

7. Vorbau (2) nach einem oder mehreren der vorstehenden Ansprüche, wobei in jeder Aufhängung der Tragarm (23', 23") ein Verbindungselement (24', 24") zur Verbindung mit einem Lenksystem aufweist.

8. Vorbau (2) nach einem oder mehreren der vorstehenden Ansprüche, wobei in jeder Aufhängung der Stoßdämpfer (26', 26") ein Dämpfungselement (63', 63") und ein elastisches Element (61', 61"), insbesondere eine Wendelfeder aufweist.

9. Vorbau (2) nach Anspruch 8, wobei in jeder Aufhängung das Dämpfungselement (63', 63") und das elastisches Element (61', 61") um eine gemeinsame Achse oder um zwei im Wesentlichen parallele Achsen angeordnet sind.

10. Vorbau (2) nach einem oder mehreren der vorstehenden Ansprüche, wobei die beiden Tragarme (23', 23") mittels einer Lenkverbindung (29) verbunden sind.

11. Vorbau (2) nach einem oder mehreren der vorstehenden Ansprüche, wobei:
die beiden Ständer (35', 35") des Kipp-Viergelenks (21) jeweilige Gehäuse bilden, wobei in jedem von ihnen der jeweilige Tragarm (23', 23") der jeweiligen Aufhängung (28', 28") drehbar aufgenommen ist.

12. Vorbau (2) nach einem oder mehreren der vorstehenden Ansprüche, wobei das Kipp-Viergelenk (21) in einer größeren Höhe als das Aufhängungs-Viergelenk (25', 25") angeordnet ist.

13. Vorbau (2) nach einem oder mehreren der vorstehenden Ansprüche mit einem Vorbau-Rahmen (9), mit dem eine Lenkhülse (11) integral ist, wobei eine Lenksäule (13) in der Lenkhülse (11) aufgenommen ist und wobei die Lenksäule (13) mittels einer Lenkverbindung (29) an die beiden Tragarme (23', 23") gebunden ist.

14. Kraftfahrzeug (1) mit mindestens einem hinteren Antriebsrad (7), wobei der Vorbau (2) nach einem oder mehreren der vorstehenden Ansprüche ist, und mit einem Paar von vorderen gesteuerten Rädern (3', 3"), wobei jedes durch eines der Radlager (41', 41") getragen wird.

## Revendications

1. Un avant-train (2) pour un véhicule à moteur comprenant :
une liaison basculante à quatre côtés (21) comprenant : une première barre transversale (31), une seconde barre transversale (33), un premier montant (35') et un second montant (35"), articulés les uns autres ;
une unité de suspension respective (28', 28") associée avec chaque montant (35', 35"), les première et seconde unités de suspensions respectives (28', 28") comprenant :
- un support de roue (41', 41") pour une roue (3', 3") du véhicule à moteur, ledit support de roue formant un axe de rotation (43', 43") de la roue (3', 3") ;
- un bras de support (23', 23") connecté de façon rotative au montant respectif (35', 35") de façon à tourner autour d'un axe de direction (27', 27") ;
- un premier vilebrequin (42A', 42A") articulé au support de roues (41', 41") et à l'arbre de support (23', 23") par l'intermédiaire de premiers axes d'articulation respectifs (47A', 48A' ; 47A", 48A") et un second vilebrequin (42B', 42B") articulé au support de roues (41', 41") et au bras de support (23', 23") par l'intermédiaire de seconds axes d'articulation respectifs (47B', 48B" ; 47B", 48B"), dans lequel le premier vilebrequin (42A', 42A"), le second vilebrequin (42B', 42B"), le support de roues (41', 41") et le bras de support (23', 23") forment une liaison de suspension à quatre côtés (25', 25") ;
- un absorbeur de chocs (26', 26") contraint à deux points (26A', 26A" ; 26B', 26B") de la liaison de suspension à quatre côtés (25', 25"), lesdits deux points étant tels que la distance entre eux change lorsque la liaison de suspension à quatre côtés (25, 25") se déplace, provoquant un changement dans la longueur de l'absorbeur de chocs, **caractérisé en ce que** lesdits premiers axes d'articulation et lesdits seconds axes d'articulation sont perpendiculaires à un plan contenant en totalité l'axe de rotation (43', 43") de la roue (3', 3").

2. L'avant-train (2) selon la revendication 1, dans lequel, dans chaque unité de suspension, l'absorbeur de chocs (26', 26") est connecté au bras de support (23', 23") et au support de roues (41', 41").

3. L'avant-train (2) selon la revendication 2, dans lequel, dans chaque unité de suspension, le support de roues (41', 41") a un corps principal, auquel le premier vilebrequin (42A', 42A") et le second vilebrequin (42B', 42B") sont articulés à deux points séparés l'un de l'autre ; et dans lequel le corps principal s'étend au-delà des points d'articulation du premier vilebrequin et du second vilebrequin avec un appendice (41A', 41A"), auquel est articulé l'absorbeur de chocs (26', 26").

4. L'avant-train (2) selon la revendication 1, dans lequel, dans chaque unité de suspension, l'absorbeur de chocs (26', 26") est connecté au bras de support (23', 23") et à une bascule auxiliaire (71', 71") qui est articulée en deux points au premier vilebrequin (42A', 42A") et au second vilebrequin (42B', 42B").

5. L'avant-train (2) selon la revendication 4, dans lequel, dans chaque unité de suspension, la bascule auxiliaire (71', 71") est agencée dans une position intermédiaire entre le support de roues (41', 41") et le bras de support (23', 23").

6. L'avant-train (2) selon l'une ou plusieurs des revendications précédentes, dans lequel chaque support de roues (41', 41") porte une unité de freinage (51', 51").

7. L'avant-train (2) selon l'une ou plusieurs des revendications précédentes, dans lequel, dans chaque unité de suspension, le bras de support (23', 23") comprend un organe de connexion (24', 24") pour une connexion à un système de direction.

8. L'avant-train (2) selon l'une ou plusieurs des revendications précédentes, dans lequel, dans chaque unité de suspension, l'absorbeur de chocs (26', 26") comprend un élément d'amortissement (63', 63") et un élément élastique (61', 61"), en particulier un ressort hélicoïdal.

9. L'avant-train (2) selon la revendication 8, dans lequel, dans chaque unité de suspension, l'élément d'amortissement (63', 63") et l'élément élastique (61', 61") sont agencés autour d'un axe commun ou autour de deux axes sensiblement parallèles.

10. L'avant-train (2) selon l'une ou plusieurs des revendications précédentes, dans lequel les deux bras de support (23', 23") sont connectés l'un à l'autre au moyen d'un système de direction (29).

11. L'avant-train (2) selon l'une ou plusieurs des revendications précédentes, dans lequel : les deux montants (35', 35") de la liaison basculante à quatre côtés (21) forment des logements respectifs dans chacun desquels le bras de support respectif (23', 23") de l'unité de suspension respective (28', 28") est supporté de façon rotative.

12. L'avant-train (2) selon l'une ou plusieurs des revendications précédentes, dans lequel la liaison basculante à quatre côtés (21) est agencée à une hauteur supérieure à celles des liaisons de suspension à quatre côtés (25', 25").

13. L'avant-train (2) selon l'une ou plusieurs des revendications précédentes, comprenant un cadre d'avant-train (9) solidaire d'un manchon de direction (11) ; dans lequel une colonne de direction (13) est logée tournante dans le manchon de direction (11) ; et dans lequel la colonne de direction (13) est contrainte, au moyen d'une liaison de direction (29), aux deux bras de support (23' ; 23").

14. Un véhicule à moteur (1) comprenant au moins une roue d'entraînement arrière (7), l'avant-train (2) selon l'une ou plusieurs des revendications précédentes et une paire de roues avant dirigées (3', 3") dont chacune est supportée par l'un desdits supports de roue (41', 41").
